# EUROPEAN PATENT APPLICATION

(11) **EP 3 208 766 A1**
(43) Date of publication of application: **23.08.2017**
(21) Application number: 17155079.1
(22) Date of filing: 07.02.2017
(51) Int. Cl.: G06Q 40/08

(54) **METHOD AND SYSTEM FOR DYNAMIC DESIGN OF INSURANCE PRODUCTS**

(30) Priority: 22.02.2016 CN 201610094954
(71) Applicant: Ebaotech Corporation, Shanghai 200433 (CN)
(72) Inventor: Wang, Jinglong, Shanghai, 200433 (CN); Huang, He, Shanghai, 200433 (CN); Hu, Qianghui, Shanghai, 200433 (CN); Shi, Yu, Shanghai, 200433 (CN); Feng, Yi, Shanghai, 200433 (CN); Xu, Weijing, Shanghai, 200433 (CN); Zhang, Haibin, Shanghai, 200433 (CN); Zhang, Hongyang, Shanghai, 200433 (CN); Jiang, Ning, Shanghai, 200433 (CN)
(74) Representative: Petraz, Gilberto Luigi

(57) **Abstract**

Provided are methods and systems for dynamically design of an insurance products, data accessing of insurance-related data elements and premium calculations. By creating a configurable and extendable basic data template for an insurance product, in which the number and sequence of the modules in the template, the levels of the modules as well as the relationship between modules are configurable, a variety of insurance products can be formulated through diverse configurations and/or extensions of modules, levels and relationships when facing to different requirements. The application also defines a computer-implemented method for calculating a premium of an insurance product, wherein the data structure of the insurance product has a plurality of levels, with each level containing one or more data elements, and wherein an relationships among data elements as well as the level of a specific data element vary from one data structure to another, the method comprising steps of (a) defining a formula and determining a procedure for calculating the premium; (b) a program initiating a premium data element search with level n, level n+m by a dynamic programming language, wherein m>1, m and n are integers, level n indicates a data element of level n, and level n+m indicates a data element of level n+m; (c) the program interacting with the data structure and finding the premium data element; and (d) returning the premium data element to the program.

## Description

### Cross-reference to Related Applications

The present invention claims priority benefits from Chinese patent application No. 201610094954.2 filed on February 22, 2016 in the name of eBaoTech Corporation, the disclosure of which is incorporated herein by reference in their entireties.

### Field of the Invention

The present invention relates to methods and systems for design of insurance products and, in particular, to methods and systems for design of insurance products by dynamic modeling. The present invention also relates to methods and systems for data accessing in an insurance product obtained by the present methods, and methods and systems for premium calculation for an insurance product.

### Background

Insurance products vary widely in terms of form and content and are subject to frequent adjustments by insurance companies in order to meet local requirements. The adjustments are always carried out by software engineers working in an insurance product or by an insurance software design company through software code tuning and debugging, in order to ensure smooth running of the products. Currently, the code of most software for insurance product design is written according to specific fixed rules. For a specific type of insurance product, therefore, the structure, hierarchy and attribute are normally pre-determined, *i.e*., statically coded. In some circumstances, the adjustments become very complicated and time consuming, especially when a lot of factors and levels are involved.

From the view of an insurance software provider, it is also time consuming and hard to repeat for the software adjustment procedures when facing different requirements of insurance companies. In particular, insurance companies in different areas or countries have significant discrepancies in terms of design requirements of insurance products due to diversity of legislation, custom, social habits and so on. In order to meet the needs of international market, extensive adjustments and modifications are performed on the code of software by insurance software provider, which is disadvantageous and undesirable.

It has become a challenge for an insurance software provider to swiftly adapt their products to different insurance companies according to each of their requirements.

### Summary of the Invention

One aspect of the invention relates to a computer-implemented method for design of an insurance product. The method comprises steps of (a) creating a basic data template for an insurance product, wherein the basic data template comprises one or more modules, with each of the one or more modules comprising one or more sub-modules, and wherein the species and number of the modules comprised in the basic data template as well as the species and number of the sub-modules comprised in each of the one or more modules are extendable; (b) configuring for a specific insurance product the species and number of the modules, and for each of the modules configured the species and number of the sub-modules; (c) assigning a level to each of the sub-modules; and (d) correlating the sub-modules to obtain the specific insurance product.

Another aspect of the invention relates to a system for design of an insurance product, comprising at least a processor configured to (a) creating a basic data template for an insurance product, wherein the basic data template comprises one or more modules, with each of the one or more modules comprising one or more sub-modules, and wherein the species and number of the modules comprised in the basic data template as well as the species and number of the sub-modules comprised in each of the one or more modules are extendable; (b) configuring for a specific insurance product the species and number of the modules, and for each of the modules configured the species and number of the sub-modules; (c) assigning a level to each of the sub-modules; and (d) correlating the sub-modules to obtain the specific insurance product; and a storage device configured to store the one or more modules and the one or more sub-modules.

Another aspect of the invention relates to a system for design of an insurance product, comprising (a) a basic data template creation unit for creating a basic data template for an insurance product, wherein the basic data template comprises one or more modules, with each of the one or more modules comprising one or more sub-modules, and wherein the species and number of the modules comprised in the basic data template as well as the species and number of the sub-modules comprised in each of the one or more modules are extendable; (b) a module and sub-module configuration unit for configuring for a specific insurance product the species and number of the modules, and for each of the modules configured the species and number of the sub-modules; (c) a level assignment unit for assigning a level to each of the sub-modules; and (d) an output unit for correlating the sub-modules to obtain the specific insurance product.

Another aspect of the invention provides a non-transitory computer-readable medium having instructions stored thereon, the instructions, when executed by at least one processor, performing a method for design of an insurance product, the method comprising: (a) creating a basic data template for an insurance product, wherein the basic data template comprises one or more modules, with each of the one or more modules comprising one or more sub-modules, and wherein the species and number of the modules comprised in the basic data template as well as the species and number of the sub-modules comprised in each of the one or more modules are extendable; (b) configuring for a specific insurance product the species and number of the modules, and for each of the modules configured the species and number of the sub-modules; (c) assigning a level to each of the sub-modules; and (d) correlating the sub-modules to obtain the specific insurance product.

In some embodiments, in step (a), the basic data template at least comprises a policy module and a clause module. In some embodiments, the basic data template further comprises one or more modules selected from a group consisting of (i) an insured object module, (ii) a coverage module and (iii) one or more intermediate modules.

In some embodiments, each of the sub-modules has a fixed attribute and an extended attribute. Preferably, the fixed attribute is previously configured. Preferably, the number and content of the extended attribute are configurable.

In some embodiments, in step (c), the sub-modules are assigned with two to eight levels, for example, four levels.

In some embodiments, in step (c), a sub-module of the policy module is assigned with level 1, and a sub-module of the policy module is assigned with level 4. In some embodiments, in step (c), a sub-module of the insured object module is assigned with level 2, and a sub-module of the coverage module is assigned with level 3. Alternatively, in step (c), a sub-module of the coverage module is assigned with level 2, and a sub-module of the insured object module is assigned with level 3.

In some embodiments, in step (d), at least two sub-modules of the insured object module are correlated to a sub-module of the policy module. In some embodiments, in step (d), at least one sub-module of the coverage module is correlated to each of the at least two sub-modules of the insured object module. In some embodiments, in step (d), at least one sub-module of the clause module is correlated to each of the at least one sub-module of the coverage module.

In some embodiments, in steps (b) and (c), the configuring and the assigning are achieved through an external interface. In some embodiments, the external interface is Excel or XML.

Another aspect of the invention is related to a computer-implemented method for accessing a specific data element contained in a data structure of an insurance product, wherein the data structure of an insurance product has a plurality of levels, with each level containing one or more data elements, and wherein an relationship of the specific data element with other data elements of the data structure as well as the level of the specific data element vary from one data structure to another, the method comprising steps of (a) a program initiating a data search with levelₙ.levelₙ₊ₘ by a dynamic programming language, wherein m>1, m and n are integers, levelₙ indicates a data element of level n, and levelₙ₊ₘ indicates a data element of level n+m; (b) the program interacting with the data structure and finding the specific data element; and (c) returning the specific data element to the program.

Another aspect of the invention is related to a system for accessing a specific data element contained in a data structure of an insurance product, wherein the data structure of an insurance product has a plurality of levels, with each level containing one or more data elements, and wherein an relationship of the specific data element with other data elements of the data structure as well as the level of the specific data element vary from one data structure to another, the system comprising at least one processor configured to carry out a method comprising steps of (a) a program initiating a data search with levelₙ.levelₙ₊ₘ by a dynamic programming language, wherein m>1, m and n are integers, levelₙ indicates a data element of level n, and levelₙ₊ₘ indicates a data element of level n+m; (b) the program interacting with the data structure and finding the specific data element; and (c) returning the specific data element to the program; and a storage device for storing the data structure of the insurance product.

Another aspect of the invention is related to a system for accessing a specific data element contained in a data structure of an insurance product, wherein the data structure of an insurance product has a plurality of levels, with each level containing one or more data elements, and wherein an relationship of the specific data element with other data elements of the data structure as well as the level of the specific data element vary from one data structure to another, the system comprising (a) a search initiation unit for a program to initiate a data search with levelₙ.levelₙ₊ₘ by a dynamic programming language, wherein m>1, m and n are integers, levelₙ indicates a data element of level n, and levelₙ₊ₘ indicates a data element of level n+m; (b) a data interaction unit for the program to interact with the data structure and finding the specific data element; and (c) a data returning unit for returning the specific data element to the program.

Another aspect of the invention provides a non-transitory computer-readable medium having instructions stored thereon, the instructions, when executed by at least one processor, performing a method for accessing a specific data element contained in a data structure of an insurance product, wherein the data structure of an insurance product has a plurality of levels, with each level containing one or more data elements, and wherein an relationship of the specific data element with other data elements of the data structure as well as the level of the specific data element vary from one data structure to another, the method comprising steps of (a) a program initiating a data search with levelₙ.levelₙ₊ₘ by a dynamic programming language, wherein m>1, m and n are integers, levelₙ indicates a data element of level n, and levelₙ₊ₘ indicates a data element of level n+m; (b) the program interacting with the data structure and finding the specific data element; and (c) returning the specific data element to the program.

In some embodiments, the dynamic programming language is selected from a group consisting of Python, Ruby, Javascript and Groovy.

In some embodiments, the plurality of levels at least corresponds to the policy and clause levels of the insurance product. In some embodiments, the plurality of levels further corresponds to the insured object and coverage levels as well as one or more intermediate levels.

In some embodiments, m is an integer from 2 to 8, for example 2 or 3.

In some embodiments, the specific data element is selected from a group consisting of a premium data, a taxation data, a commission data and a discount data.

In some embodiments, the levelₙ.levelₙ₊ₘ is configurable in the program.

In some embodiments, the variation is achieved manually through an external interface. In some embodiments, the external interface is Excel or XML.

Another aspect of the invention is related to a computer-implemented method for calculating a premium of an insurance product, wherein the data structure of the insurance product has a plurality of levels, with each level containing one or more data elements, and wherein an relationships among data elements as well as the level of a specific data element vary from one data structure to another, the method comprising steps of (a) defining a formula and determining a procedure for calculating the premium; (b) a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m; (c) the program interacting with the data structure and finding the premium data element; and (d) returning the premium data element to the program.

Another aspect of the invention is related to a system for calculating a premium of an insurance product, wherein the data structure of the insurance product has a plurality of levels, with each level containing one or more data elements, and wherein an relationships among data elements as well as the level of a specific data element vary from one data structure to another, the system comprising at least one processor configured to carry out a method comprising steps of (a) defining a formula and determining a procedure for calculating the premium; (b) a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m; (c) the program interacting with the data structure and finding the premium data element; and (d) returning the premium data element to the program; and a storage device for storing the data structure of the insurance product.

Another aspect of the invention is related to a system for calculating a premium of an insurance product, wherein the data structure of the insurance product has a plurality of levels, with each level containing one or more data elements, and wherein an relationships among data elements as well as the level of a specific data element vary from one data structure to another, the system comprising (a) a definition and determination unit for defining a formula and determining a procedure for calculating the premium; (b) a search initiation unit for a program to initiate a premium data element with levelₙ.levelₙ₊ₘ by a dynamic programming language, wherein m>1, m and n are integers, levelₙ indicates a data element of level n, and levelₙ₊ₘ indicates a data element of level n+m; (c) a data interaction unit for the program to interact with the data structure and finding the premium data element; and (d) a data returning unit for returning the premium data element to the program.

Another aspect of the invention provides a non-transitory computer-readable medium having instructions stored thereon, the instructions, when executed by at least one processor, performing a method for calculating a premium of an insurance product, wherein the data structure of the insurance product has a plurality of levels, with each level containing one or more data elements, and wherein an relationships among data elements as well as the level of a specific data element vary from one data structure to another, the method comprising steps of (a) defining a formula and determining a procedure for calculating the premium; (b) a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m; (c) the program interacting with the data structure and finding the premium data element; and (d) returning the premium data element to the program.

In some embodiments, the dynamic programming language is selected from a group consisting of Python, Ruby, Javascript and Groovy.

In some embodiments, the plurality of levels at least corresponds to the policy and clause levels of the insurance product. In some embodiments, the plurality of levels further corresponds to the insured object and coverage levels as well as one or more intermediate levels.

In some embodiments, m is an integer from 2 to 8, for example 2 or 3.

In some embodiments, after step (d), the premium is calculated by the formula and a calculation result is returned to the data structure.

In some embodiments, in step (a), the determination comprises a step of determining the sequence of premium calculation.

In some embodiments, the levelₙ.levelₙ₊ₘ is configurable in the program.

In some embodiments, the variation is achieved manually through an external interface. In some embodiments, the external interface is Excel or XML.

By creating a configurable and extendable basic data template for an insurance product, in which the number and sequence of the modules in the template, the levels of the modules as well as the relationship between modules are configurable, a variety of insurance products can be formulated through diverse configurations and/or extensions of modules, levels and relationships when facing to different requirements. The technicians are able to design an insurance product meeting a specific requirement in a more fast and convenient way by the dynamic ( in contrast to static) methods provided by the present invention without the need of modifications or changes of the code of an insurance product.

### Brief Description of Drawings

Fig. 1 is a flow chart showing a method 100 of design of an insurance product according to one embodiment of the invention.
Fig. 2 illustrates modules and levels contained in a typical insurance product.
Fig. 3 shows one or more intermediate modules contained in a basic data template according to one embodiment of the invention.
Fig. 4 shows the modules and sub-modules contained in an example basic data template.
Fig. 5 is a block diagram showing a design system 200 according to one embodiment of the invention.
Fig. 6 is a block diagram showing a design system 200' according to one embodiment of the invention.
Fig. 7 is a flow chart showing a method 300 of accessing a specific data element in a data structure of an insurance product according to one embodiment of the invention.
Fig. 8 shows the structures of two different insurance products obtained through the invented method.
Fig. 9 a block diagram showing a data accessing system 400 according to one embodiment of the invention.
Fig. 10 is a block diagram showing a data accessing system 400' according to one embodiment of the invention.
Fig. 11 is a flow chart showing a method 600 of calculating a premium of an insurance product according to one embodiment of the invention.
Fig. 12 is a flow chart showing a method 600 of calculating a premium of an insurance product according to another embodiment of the invention.
Fig. 13 a block diagram showing a premium calculation system 700 according to one embodiment of the invention.
Fig. 14 is a block diagram showing a premium calculation system 700' according to one embodiment of the invention.

### Detailed Description of the Invention

The inventions will now be described in more detail in reference to the examples given herein. It should be understood that the example provided herein are for illustrative purpose only and should not be explained as limiting to the scope of the invention.

### Methods and Systems of Design of an Insurance Product

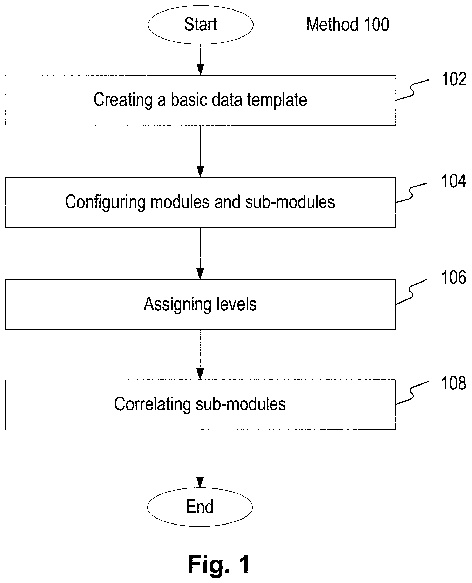

A first aspect of the invention relates to a method for design of an insurance product, which is normally implemented by a computer. The flow chart of the method 100 is shown in Figure 1, comprising creating a basic data template for an insurance product (step 102); configuring a module and a sub-module for a specific insurance product (step 104); assigning a level for each of the sub-modules (step 106); and correlating each of the sub-modules to obtain the specific insurance product (step 108).

In the present invention, the basic data template comprises one or more modules with each of the one or more modules containing one or more sub-modules. The species and number of the modules comprised in the basic data template, and the species and number of the sub-modules comprised in each of the modules are extendable. By "extendable" it means increasable, changeable or modifiable. That is, the quantity and species of the modules and sub-modules of a basic data template can be increased, changed or modified in order to form more configurable modules and sub-modules, such that more types of insurance products can be provided. The more the number and species of modules and sub-modules that the basic data template has, the more the types of insurance products can be designed. Preferable basic data template should include as many species of modules and/or sub-modules as possible, for example those conventionally used in the art.

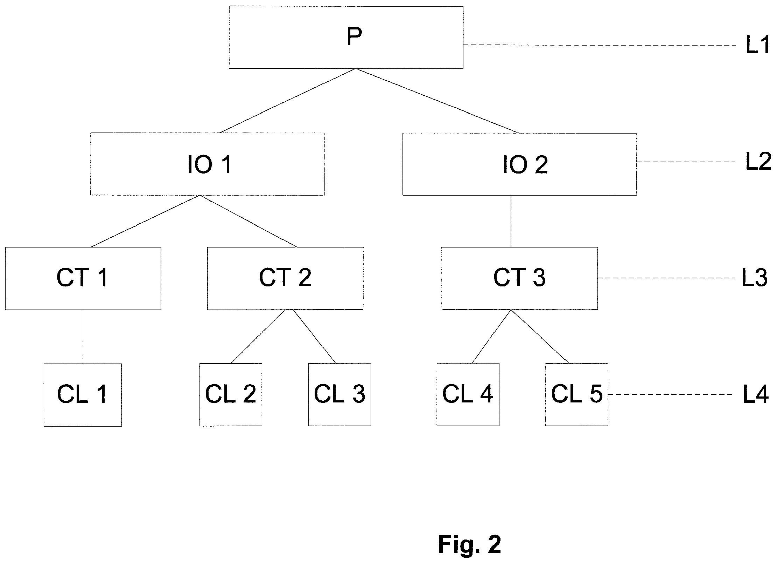

A typical basic data template for an insurance product at least includes a policy module (P) and a clause module (CL). Usually, a basic data template further includes an insured object module (IO) and a coverage module (CT). Fig. 2 shows the modules and levels that a typical insurance product contains. As shown, an insurance product generally contains a policy module P, an insured object module IO, a coverage module CT and a clause module CL.

A policy module P may contain more than one insured object modules IO (for example IO 1 and IO 2). Each of the insured object modules IO may contain one ore more coverage modules CT. For example, the insured object module IO 1 may contain two coverage modules, CT 1 and CT 2. Each of the coverage modules CT may contain one or more clause modules CL. For example, the coverage module CT 2 contains two clause modules CL 2 and CL 3. In the insurance product as shown, the policy module P is at the first level L1, the insured object module IO is at the second level L2, the coverage module CT is at the third level L3, and the clause module CL is at the fourth level L4.

For example, a policy may include two policy modules P, a vehicle insurance and a life insurance. The insured object IO can be a car for the vehicle insurance, and a person for the life insurance. With respect to the car, the coverage CT can include collision, robbery and theft, third-party liability and so on. For the person, the coverage CT may comprise accident, critical illness and etc. Each of the coverage including the collision, robbery and theft, third-party liability, accident, and critical illness as mentioned above may include one or more specific insurance clauses CL.

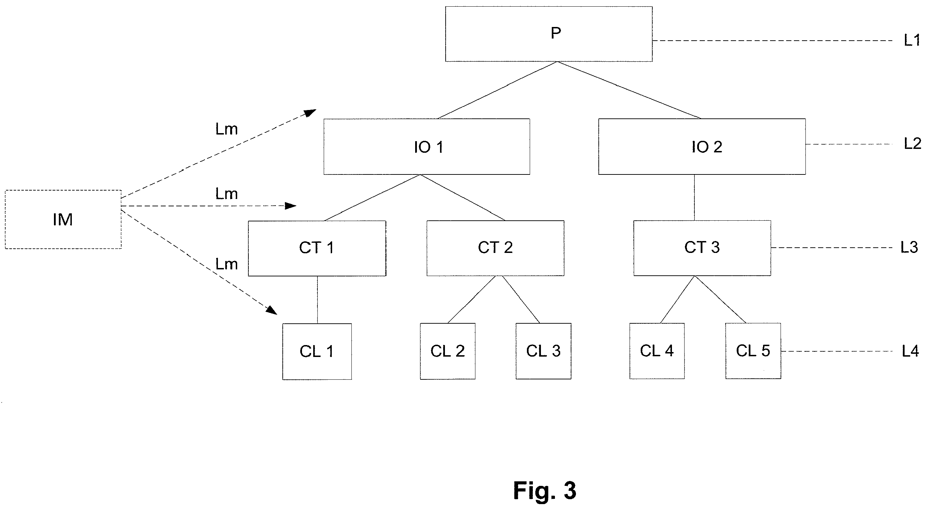

As shown in Fig. 3, in some embodiments of the invention, the basic data template further includes one or more intermediate modules IM. As used herein, "intermediate module" means a module that is not specifically named in the present invention as the policy, insured object, coverage and clause modules. The one or more intermediate modules independently constitute a level Lm, for example between L1 and L2 as shown in Fig. 2 or between L2 and L3. The quantity and species of the intermediate modules are configurable and also extendable.

For example, a vehicle insurance can additionally comprises a driver module independent of and in addition to the insured object module, the coverage module and the clause module. The driver module may exist as a level between the policy module and the insured object module, such that a five-level structured insurance product is formed. As a further example, a property policy may additionally include an owner module independent of and in addition to the insured object module, the coverage module and the clause module. The owner module can exist as a level between the insured object module and the coverage module.

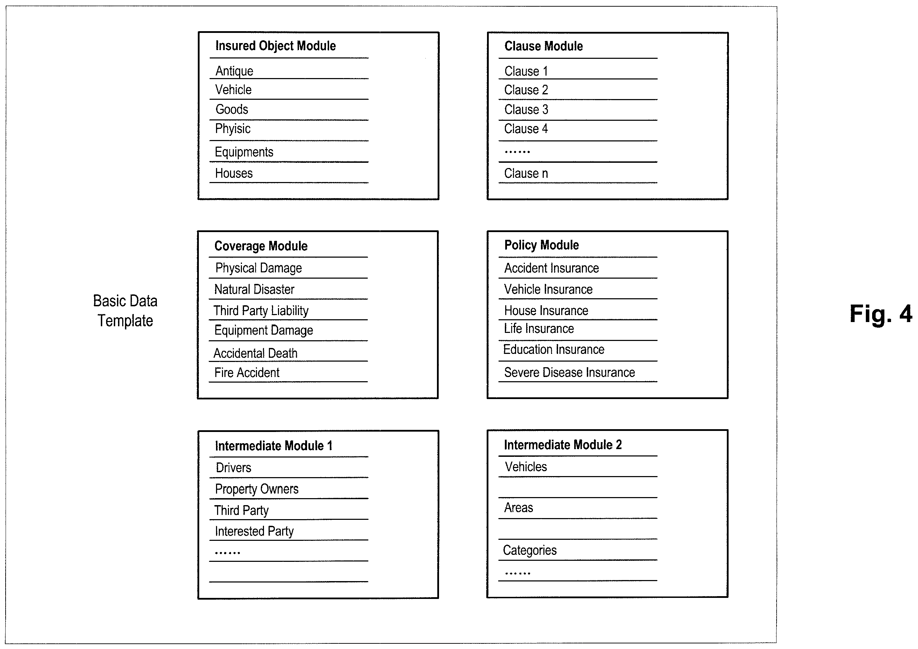

In the method of the present invention, each of the modules comprises one or more sub-modules. The number and type of the sub-modules are extendable. Fig. 4 shows the modules and sub-modules contained in a basic data template. It is noted that the exemplary modules and sub-modules shown in Figure 4 are exhaustive and more embodiments can be conceived by a skilled artisan. In addition, a same sub-module can exist simultaneously in a plurality of different modules. For example, a vehicle as a sub-module of an insured object can also exist as a sub-module of an intermediate module.

In the process of design of an insurance product, one or more sub-modules are selected (configured) for each of the module as needed. An insurance product is formed through the level assignment and correlation of each of the sub-modules, which will be described in detail below. In some embodiments, each of the sub-modules has a fixed attribute and an extended attribute. The fixed attribute can be previously configured and the number and type of the extended attribute can be configured later.

Generally, attributes well-known or common in the art can be previously configured as fixed attributes. For example, for a vehicle as an insured object, the age, model, brand, travel range, number of seats and etc. are provided as fixed attributes. Generally, attributes that are expectable may serve as a fixed attribute. An extended attribute is an attribute that is generally not able to be provided in advance but newly given for a particular purpose such as requirements of local legislation or custom. The provision of extended attributes imparts more applicability of the invented methods provided herein.

In the present method, in step 106, each of the sub-modules is assigned with a level, following the sub-module configuration step. Level assignment is performed to assign one level for each sub-module. More than one sub-module can be assigned with a same level such that a single level may comprise one or more sub-modules. For example, in a vehicle insurance product, coverage such as physical damage, third party liability, collision, and flood can be assigned with a same level, such as level 3. As another exmple, in a house insurance product, house 1 and house 2 can be assigned with a same level, such as level 2.

Usually, a total of 2 to 8 levels can be assigned to sub-modules with each level comprising a plurality of sub-modules, according to the type of sub-modules and actual needs. However, a 3- to 4-level structure is more common. For example, a sub-module of a policy module is assigned with level 1 and that of a clause module level 4. Alternatively, or in addition, a sub-module of an insured object module is assigned with level 2, and that of a coverage module level 3. There is no limiting regarding the level that a sub-module can be assigned. It is configurable by an appropriate technician. Also, there is no limitation concerning the number of sub-modules that could be included in one level.

In step 108, the sub-modules are correlated to assemble a specific insurance product. For instance, at least two sub-modules of insured objects are correlated to a policy sub-module. For example, at least one coverage sub-module is correlated to each of sub-modules of insured objects. For another example, at least one clause sub-module is correlated with each of coverage sub-modules. The correlations among each of the sub-modules enable each level of sub-modules to have corresponding sub-module correlated, such that an insurance product with a completely correlated data structure can be obtained.

In the present invention, the configuration and assignment can be achieved through an external interface such as Excel or XML. It will be appreciated by a skilled artisan that other suitable man-machine interaction measures are also possible.

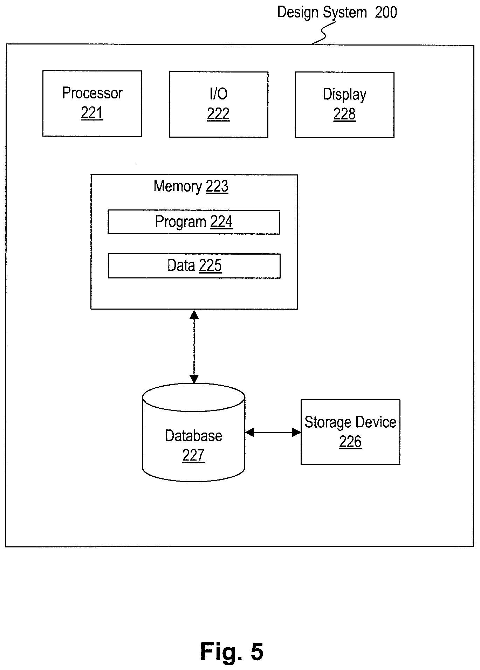

Fig. 5 illustrates a block diagram of a design system 200 according to one embodiment of the invention. The system 200 includes a processor 221, an input/output (I/O) device 222, a memory 223, a storage device 226, a database 227, and a display device 228.

Processor 221 may be one or more known processing devices, such as a microprocessor from the Pentium™ family manufactured by Intel™ or the Turion™ family manufactured by AMD™. Processor 221 may include a single core or multiple core processor system that provides the ability to perform parallel processing. For example, processor 221 may be a single core processor that is configured with virtual processing technologies. In certain embodiments, processor 221 may use logical processors to simultaneously execute and control multiple processes. Processor 221 may implement virtual machine technologies, or other similar known technologies, to provide the ability to execute, control, run, manipulate, store, etc., multiple software processes, applications, programs, etc. In another embodiment, processor 221 includes a multiple-core processor arrangement (e.g., dual or quad core) that is configured to provide parallel processing functionalities to allow computing system 200 to execute multiple processes simultaneously. One of ordinary skill in the art would understand that other types of processor arrangements could be implemented that provide for the capabilities disclosed herein.

Memory 223 may include one or more storage devices configured to store instructions used by processor 221 to perform functions related to the disclosed embodiments. For example, memory 223 may be configured with one or more software instructions, such as program 224 that may perform one or more operations when executed by processor 221. The disclosed embodiments are not limited to separate programs or computers configured to perform dedicated tasks. For example, memory 223 may include a single program 224 that performs the functions of design system 200, or program 224 could comprise multiple programs. Memory 223 may also store data 225 that may reflect any type of information in any format that may be used to perform functions consistent with the disclosed embodiments. For example, data 225 may include metadata of a plurality of modules and sub-modules of which a detailed description is provided below, and other data enabling processor 221 to perform functions disclosed in consistent with the disclosed embodiments.

I/O devices 222 may be configured to allow data to be received and/or transmitted. I/O devices 222 may include one or more digital and/or analog communication devices that allow design system 200 to communicate with other machines and devices. Design system 200 may also include or be communicatively connected to one or more of database 227 through a network. In exemplary embodiments, database 227 may store metadata of the basic data template used for the creation of an insurance product.

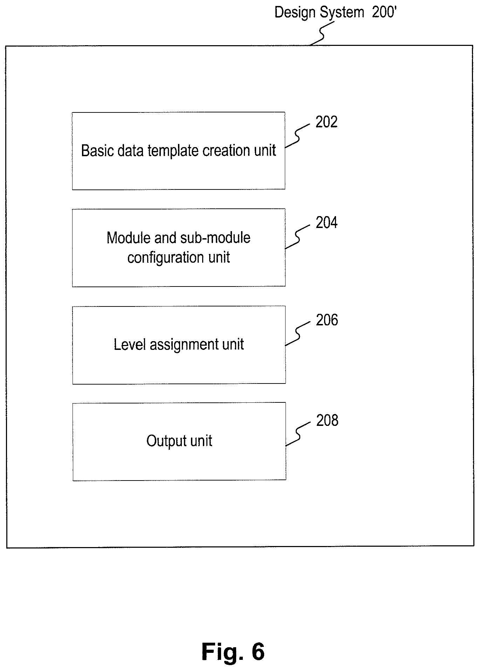

Fig. 6 is a diagram illustrating a design system 200' according to some embodiments of the invention. The system 200' include a basic data template creation unit 202, for creating a basic data template for an insurance product, wherein the basic data template comprises one or more modules, with each of the one or more modules comprising one or more sub-modules, and wherein the species and number of the modules comprised in the basic data template as well as the species and number of the sub-modules comprised in each of the one or more modules are extendable; a module and sub-module configuration unit 204, for configuring for a specific insurance product the species and number of the modules, and for each of the modules configured the species and number of the sub-modules; a level assignment unit 206 for assigning a level to each of the sub-modules; and an output unit 208 for correlating the sub-modules to obtain the specific insurance product.

### Methods and Systems for Accessing a Specific Data Element

Another aspect of the invention is to provide a method and system for data access, which method is normally carried out by a computer. The method of data access provides a more convenience mode of data access for the insurance products dynamically constructed by the methods disclosed herein, in order for data processing and handling for various purposes.

The data structures of insurance products obtainable by the present methods significantly vary with respect to each other due to the extensive differences among module and sub-module configurations, level assignments and correlations. The data structure of this kind is usually layered with each level comprising one or more data elements. The relationship of a specific data element with other data elements in the same data structure varies from one data structure to another and/or the level where the specific data element resides in is also variable. This cause the result that conventional data accessing methods, such as traversing method, are not well performed to meeting requirements of fast data access, which will be described in more detail hereinafter.

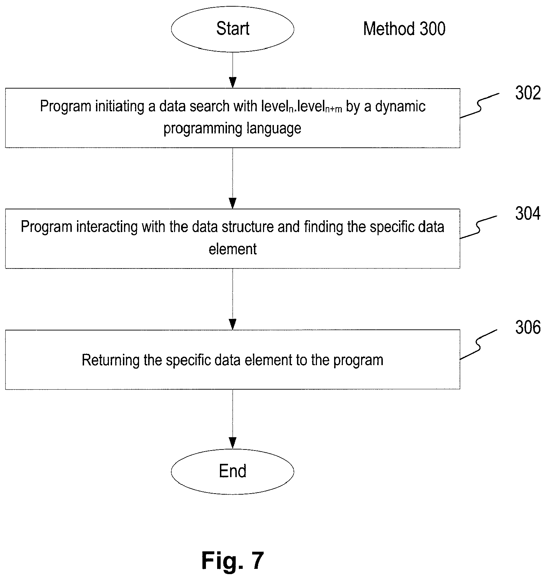

In order to satisfy the demands of fast and convenience accessing to a data element of an insurance product obtained through a method described herein, a method for accessing to a specific data element of a data structure for an insurance product is provided. The method is normally implemented by a computer. A exemplary method 300 is illustrated in Fig. 7, which comprises steps of a program initiating a data search with levelₙ.levelₙ₊ₘ by a dynamic programming language (step 302), wherein m>1, m and n are integers, levelₙ indicates a data element of level n, and levelₙ₊ₘ indicates a data element of level n+m; the program interacting with the data structure and finding the specific data element (step 304); and returning the specific data element to the program (step 306).

The terms dynamic programming language, dynamic compiling language, or dynamic language can be used exchangeable in the present invention. Non-limiting examples of the dynamic language is Python, Ruby, Javascript or Groovy language. It will be appreciated by a skilled artisan that other dynamic languages are also possible.

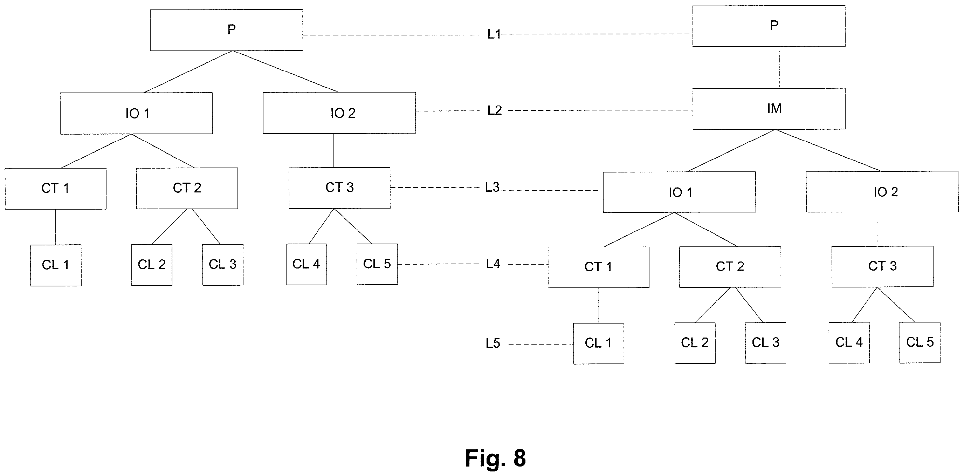

The formula levelₙ.levelₙ₊ₘ is not the actual form used during data accessing. In the present invention, levelₙ represents a data element in level n, and levelₙ₊ₘ indicates a data element in level n+m. Referring to Fig. 8, two different insurance products with different structures, obtained through the insurance product design methods of the present invention, are shown. In the insurance product shown on the left side, a policy P may include two insured objects, IO1 and IO2, with IO1 including two coverage CT1 and CT2, and IO2 including only one coverage CT3. The coverage CT1 contains only one clause CL1, while CT2 and CT3 each contain two clauses, CL2, CL3 and CL4, CL5, respectively. In this situation, P is at level 1, IO1 and IO2 are at level 2, CT1, CT2 and CT3 are at level 3, and CL1 to CL5 are at level 4.The insurance product shown on the right differs from that on the left in that a policy P contains an intermediate module IM located at an independent level. Therefore, the insurance product on the right has a 5-level structure with the intermediate module IM located between the level of the policy P and the level of the insured objects IO1 and IO2.

In this case, data accessing is available for the insurance product shown on the left if a static language, for example C or C++, in the form of e.g. policy.object, is used. However, the data accessing to the insurance product shown on the right will fail if the same language format, i.e., policy.object, is used because of the existence of the IM level. An error will be reported.

In view of the above, the present invention takes advantage of a dynamic programming language to accessing data with a formula levelₙ.levelₙ₊ₘ. For example, a simple format of policy.object could be used to access a data element of an insured object at level 3, and a simple format of policy.clause could be used to access a data element of a clause at level 5. In other embodiments, a format of object.clause can also be used to access the data element of the insurance product shown on the right of Fig. 8. With respect to formula levelₙ.levelₙ₊ₘ, when m>1, an error will be reported when a static language is used. However, data access is available when a dynamic language is used with the data structure of a specific insurance product of the present invention. It is advantageous especially for the data structures of insurance products where the level and location of a data element are variable.

It should be noted that the data structures shown in Fig. 8 are exemplary only. Data structures in real insurance products may far complex than the examples, for example, as many as 8 levels may be involved and more sub-modules may be provided in each level. The data access methods described herein are easily applicable to more complex data structures.

In some embodiments, non-limiting examples of the specific data element include premium data, taxation data, commission data or discount data. It can be expected by a skilled artisan that other insurance related data is also possible. The data access methods described herein do not have any limitation regarding the attributes of the data itself and is adaptive to any type of specific data element. For example, when the specific data element is a premium data, the present data access method can be used in conjunction with a premium rating program to achieve premium calculation, which will be described in more detail hereinafter. In some embodiments, when the specific data element is a taxation data, the data access method can be used with a taxation calculation program to achieve tax calculation, and if used further with a net premium calculation program, a tax deduction can be achieved. In some embodiments, when the specific data element is a taxation data, the data access method can be used with a discount calculation program to achieve discount deduction.

In some embodiments, the formula levelₙ.levelₙ₊ₘ is configurable in program, which means that a skilled person in the art is able to access to any specific data element in a given level of a data structure of an insurance product from any level higher than the given level according to requirements or at their will. That is, the access to a specific data element does not necessarily start from the first level, for instance, the policy level.

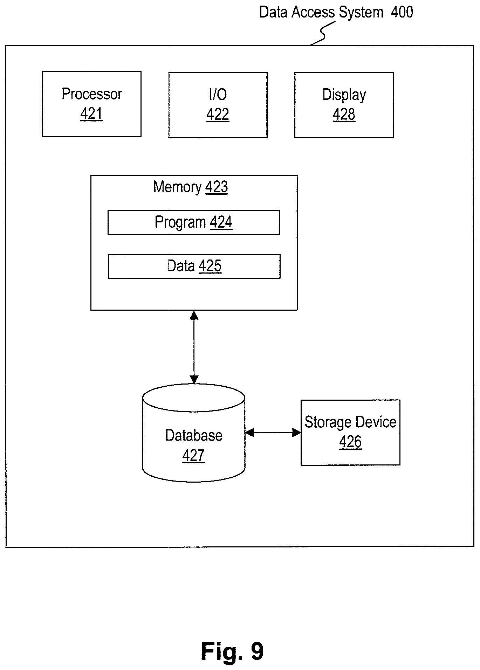

Some embodiments of the invention provide a system for specific data access in a data structure of an insurance product. Fig. 9 shows a data access system 400 which includes a processor 421, an input/output (I/O) device 422, a memory 423, a storage device 426, a database 427, and a display device 428. Processor 421 may be one or more known processing devices. Processor 421 may include a single core or multiple core processor system that provides the ability to perform parallel processing. For example, processor 221 may be a single core processor that is configured with virtual processing technologies. In certain embodiments, processor 421 may use logical processors to simultaneously execute and control multiple processes. Processor 421 may implement virtual machine technologies, or other similar known technologies, to provide the ability to execute, control, run, manipulate, store, etc., multiple software processes, applications, programs, etc.

In another embodiment, processor 421 includes a multiple-core processor arrangement (e.g., dual or quad core) that is configured to provide parallel processing functionalities to allow the data access system 400 to execute multiple processes simultaneously. One of ordinary skill in the art would understand that other types of processor arrangements could be implemented that provide for the capabilities disclosed herein.

Memory 423 may include one or more storage devices configured to store instructions used by processor 421 to perform functions related to the disclosed embodiments. For example, memory 423 may be configured with one or more software instructions, such as program 224 that may perform one or more operations when executed by processor 421. The disclosed embodiments are not limited to separate programs or computers configured to perform dedicated tasks. For example, memory 423 may include a single program 424 that performs the functions of data access system 400, or program 424 could comprise multiple programs. Memory 423 may also store data 425 that may reflect any type of information in any format that may be used to perform functions consistent with the disclosed embodiments. For example, data 425 may include metadata of a plurality of modules and sub-modules, and other data enabling processor 421 to perform functions disclosed in consistent with the disclosed embodiments.

I/O devices 422 may be configured to allow data to be received and/or transmitted. I/O devices 422 may include one or more digital and/or analog communication devices that allow data access system 400 to communicate with other machines and devices. Data access system 400 may also include or be communicatively connected to one or more of database 427 through a network. In exemplary embodiments, database 427 may store metadata of the basic data template used for the creation of an insurance product.

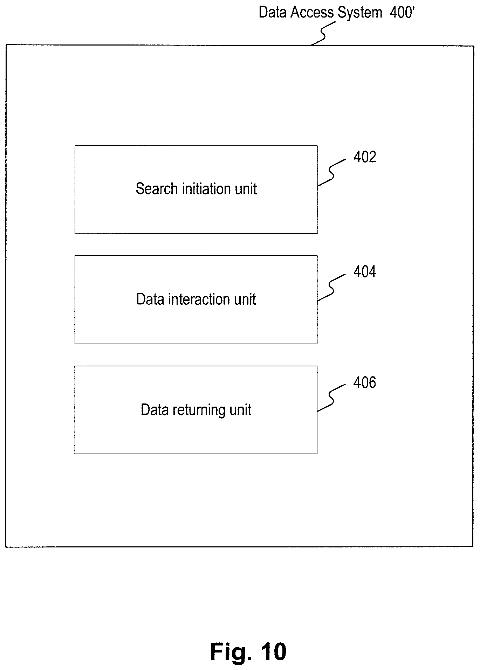

Some embodiments of the invention provide a system 400' for specific data access in a data structure of an insurance product. As shown in Fig. 10, the system 400' includes a search initiation unit 402 for a program to initiate a data search with levelₙ.levelₙ₊ₘ by a dynamic programming language, wherein m>1, m and n are integers, levelₙ indicates a data element of level n, and levelₙ₊ₘ indicates a data element of level n+m; a data interaction unit 404 for the program to interact with the data structure and finding the specific data element; and a data returning unit 406 for returning the specific data element to the program.

### Premium Calculation Methods and Systems

The present invention further provides a method for calculating a premium of an insurance product, which is normally implemented by a computer. The data access methods provided in some embodiments of the invention is used with a premium calculation program to achieve premium calculation.

The term "premium" as used herein includes gross and net premiums as may be determined according to the computational formulas. A computational formula is determined by an insurance company or an insurance software provider empirically, taking into account of other factors. The program of premium calculation is also determined by an insurance company or an insurance software provider and varies upon factors such as legislations and customs. In some embodiments, the determination of a program of premium calculation includes a step of configuring the sequence of premium calculation. The sequence is generally pre-determined, but may vary due to areas, laws and specific campaigns.

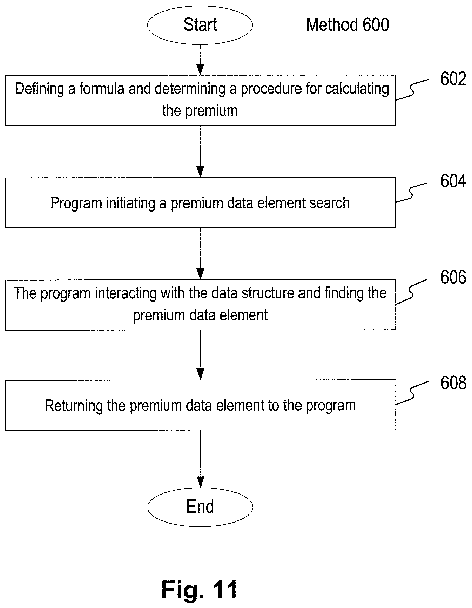

In some embodiments, a method of calculating a premium of an insurance product is provided. The data structure of the insurance product has a plurality of levels, with each level containing one or more data elements, and an relationships among data elements as well as the level of a specific data element vary from one data structure to another. A exemplary method 600 is shown in Fig. 11. The method 600 comprises defining a formula and determining a procedure for calculating the premium (step 602); a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m (step 604); the program interacting with the data structure and finding the premium data element (step 606); and returning the premium data element to the program (step 608).

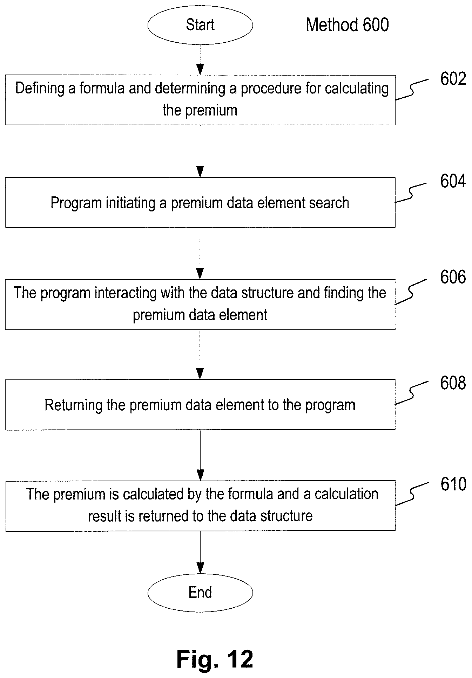

In certain embodiments, as shown in Fig. 12, following step 608, the method proceeds to calculate the premium according to the formula and return the result of calculation to the data structure (step 610).

A premium data element may exist at any level, more than one level, or all of the levels, of a data structure. In some embodiments, the formula levelₙ.levelₙ₊ₘ is configurable in program, which means a skilled person in the art is able to access to any specific data element in a given level of a data structure of an insurance product from any level higher than the given level according to requirements or at their will.

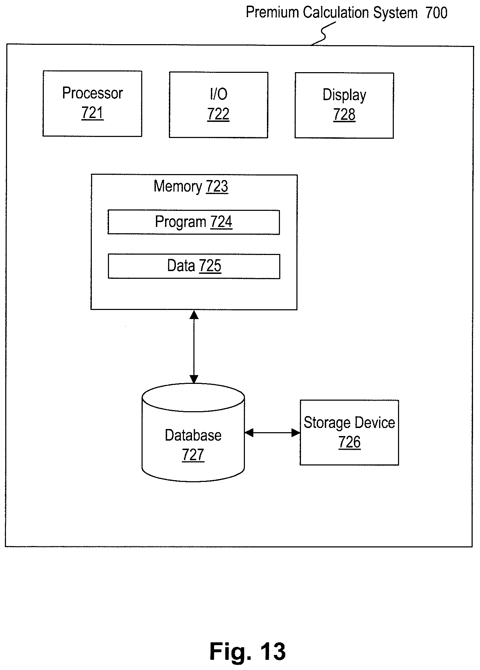

In some embodiments, the present invention provides a system for calculating a premium of an insurance product. Fig. 13 shows a premium calculation system 700 which includes a processor 721, an input/output (I/O) device 722, a memory 723, a storage device 726, a database 727, and a display device 728. Processor 721 may be one or more known processing devices. Processor 721 may include a single core or multiple core processor system that provides the ability to perform parallel processing. For example, processor 721 may be a single core processor that is configured with virtual processing technologies. In certain embodiments, processor 721 may use logical processors to simultaneously execute and control multiple processes. Processor 721 may implement virtual machine technologies, or other similar known technologies, to provide the ability to execute, control, run, manipulate, store, etc., multiple software processes, applications, programs, etc.

In another embodiment, processor 721 includes a multiple-core processor arrangement (e.g., dual or quad core) that is configured to provide parallel processing functionalities to allow the premium calculation system 700 to execute multiple processes simultaneously. One of ordinary skill in the art would understand that other types of processor arrangements could be implemented that provide for the capabilities disclosed herein.

Memory 723 may include one or more storage devices configured to store instructions used by processor 721 to perform functions related to the disclosed embodiments. For example, memory 723 may be configured with one or more software instructions, such as program 724 that may perform one or more operations when executed by processor 721. The disclosed embodiments are not limited to separate programs or computers configured to perform dedicated tasks. For example, memory 723 may include a single program 724 that performs the functions of the premium calculation system 700, or program 724 could comprise multiple programs. Memory 723 may also store data 725 that may reflect any type of information in any format that may be used to perform functions consistent with the disclosed embodiments. For example, data 725 may include metadata of a plurality of modules and sub-modules, and other data enabling processor 721 to perform functions disclosed in consistent with the disclosed embodiments.

I/O devices 722 may be configured to allow data to be received and/or transmitted. I/O devices 722 may include one or more digital and/or analog communication devices that allow the premium calculation system 700 to communicate with other machines and devices. Premium calculation system 700 may also include or be communicatively connected to one or more of database 727 through a network. In exemplary embodiments, database 727 may store metadata of the basic data template used for the creation of an insurance product.

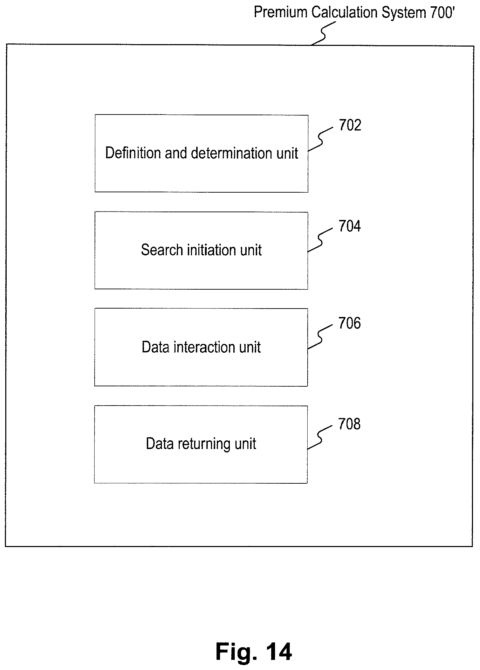

In some embodiments of the invention, a system 700' for calculating a premium of an insurance product. Fig. 14 shows a premium calculation system 700' which includes a definition and determination unit 702 for defining a formula and determining a procedure for calculating the premium; a search initiation unit 704 for a program to initiate a premium data element with levelₙ.levelₙ₊ₘ by a dynamic programming language, wherein m>1, m and n are integers, levelₙ indicates a data element of level n, and levelₙ₊ₘ indicates a data element of level n+m; a data interaction unit 706 for the program to interact with the data structure and finding the premium data element; and a data returning unit 708 for returning the premium data element to the program.

In some embodiments, provided is a non-transitory computer-readable medium having instructions stored thereon, the instructions, when executed by at least one processor, performing any one of the methods described herein, for example a method for design of an insurance product, a method of data access or a method for calculating a premium of an insurance product.

Other embodiments of the invention will be apparent to those skilled in the art from consideration of the specification and practice of the invention disclosed herein. The scope of the invention is intended to cover any variations, uses, or adaptations of the invention following the general principles thereof and including such departures from the present disclosure as come within known or customary practice in the art. It is intended that the specification and examples be considered as exemplary only, with a true scope and spirit of the invention indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A computer-implemented method for calculating a premium of an insurance product, wherein the data structure of the insurance product has a plurality of levels, with each level containing one or more data elements, and wherein an relationships among data elements as well as the level of a specific data element vary from one data structure to another, the method comprising steps of
(a) defining a formula and determining a procedure for calculating the premium;
(b) a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m;
(c) the program interacting with the data structure and finding the premium data element; and
(d) returning the premium data element to the program.

2. The method of claim 1, wherein the dynamic programming language is selected from a group consisting of Python, Ruby, Javascript and Groovy.

3. The method of claim 1, wherein the plurality of levels at least corresponds to the policy and clause levels of the insurance product.

4. The method of claim 3, wherein the plurality of levels further corresponds to the insured object and coverage levels as well as one or more intermediate levels.

5. The method of claim 1, wherein m is an integer from 2 to 8.

6. The method of claim 1, wherein after step (d), the premium is calculated by the formula and a calculation result is returned to the data structure.

7. The method of claim 1, wherein in step (a), the determination comprises a step of determining the sequence of premium calculation.

8. The method of claim 1, wherein the levelₙ.levelₙ₊ₘ is configurable in the program.

9. The method of claim 1, wherein the variation is achieved manually through an external interface.

10. The method of claim 9, wherein the external interface is Excel or XML.

11. A system for calculating a premium of an insurance product, wherein the data structure of the insurance product has a plurality of levels, with each level containing one or more data elements, and wherein an relationships among data elements as well as the level of a specific data element vary from one data structure to another, the system comprising
at least one processor configured to carry out a method comprising steps of
(a) defining a formula and determining a procedure for calculating the premium;
(b) a program initiating a premium data element search with levelₙ.levelₙ₊ₘ by a dynamic programming language, wherein m>1, m and n are integers, levelₙ indicates a data element of level n, and levelₙ₊ₘ indicates a data element of level n+m;
(c) the program interacting with the data structure and finding the premium data element; and
(d) returning the premium data element to the program; and
a storage device for storing the data structure of the insurance product.

12. A system for calculating a premium of an insurance product, wherein the data structure of the insurance product has a plurality of levels, with each level containing one or more data elements, and wherein an relationships among data elements as well as the level of a specific data element vary from one data structure to another, the system comprising
(a) a definition and determination unit for defining a formula and determining a procedure for calculating the premium;
(b) a search initiation unit for a program to initiate a premium data element with levelₙ.levelₙ₊ₘ by a dynamic programming language, wherein m>1, m and n are integers, levelₙ indicates a data element of level n, and levelₙ₊ₘ indicates a data element of level n+m;
(c) a data interaction unit for the program to interact with the data structure and finding the premium data element; and
(d) a data returning unit for returning the premium data element to the program.

13. The system of claim 11, wherein the dynamic programming language is selected from a group consisting of Python, Ruby, Javascript and Groovy.

14. The system of claim 11, wherein the plurality of levels at least corresponds to the policy and clause levels of the insurance product.

15. The system of claim 14, wherein the plurality of levels further corresponds to the insured object and coverage levels as well as one or more intermediate levels.

16. The system of claim 11, wherein m is an integer from 2 to 8.

17. The system of claim 11, wherein after step (d), the premium is calculated by the formula and a calculation result is returned to the data structure.

18. The system of claim 11, wherein in step (a), the determination comprises a step of determining the sequence of premium calculation.

19. The system of claim 11, wherein the levelₙ.levelₙ₊ₘ is configurable in the program.

20. The system of claim 11, wherein the variation is achieved manually through an external interface.

21. The system of claim 20, wherein the external interface is Excel or XML.
